(19) Europäisches Patentamt

European Patent Office

Office européen des brevets

(11) **EP 1 087 285 A2**

(12) **EUROPÄISCHE PATENTANMELDUNG**

(43) Veröffentlichungstag:
28.03.2001 Patentblatt 2001/13

(51) Int. Cl.⁷: **G06F 1/025**

(21) Anmeldenummer: **00114745.3**

(22) Anmeldetag: **08.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.09.1999 DE 19946007**

(71) Anmelder:
**Patent-Treuhand-Gesellschaft für elektrische Glühlampen mbH**
**81543 München (DE)**

(72) Erfinder: **Busse, Olaf**
**80686 München (DE)**

(54) **Vorrichtung zur Erzeugung von digitalen Steuersignalen**

(57)    Die Erfindung betrifft eine Vorrichtung zur Erzeugung von digitalen Steuersignalen mit folgenden Merkmalen:

- einem Oszillator (10), der einen digitaeln Ausgang (11) besitzt,
- zwei Speichermitteln (20, 30) zur Speicherung des Wertes digital codierten Variablen, die jeweils einen mit dem digitalen Ausgang (11) des Oszillators (10) verbundenen Takteingang (22, 31), einen Dateneingang (21, 32) und einen Datenausgang (23, 33) aufweisen,
- einem Addierer (40), der zwei Dateneingänge (41, 42), einen Datenausgang (43) und einen Carry-Ausgang (44) aufweist, wobei

- der erste Dateneingang (41) des Addierers (40) mit dem Datenausgang (23) des ersten Speichermittels (20) verbunden ist,
- der zweite Dateneingang (42) des Addierers (40) mit dem Datenausgang (33) des zweiten Speichermittels (30) verbunden ist,
- der Datenausgang (43) des Addierers (40) mit dem Dateneingang (32) des zweiten Speichermittels (30) verbunden ist, und
- der Carry-Ausgang (44) des Addierers (40) mit einem Impulsteiler (50) verbunden ist.

FIG. 1

**Beschreibung**

Die Erfindung betrifft eine Vorrichtung zur Erzeugung von digitalen Steuersignalen gemäß des Patentanspruchs 1 und ein Verfahren zur Erzeugung digitaler Steuersignale gemäß des Patentanspruchs 7.

## I. Technisches Gebiet

Insbesondere betrifft die Erfindung eine Vorrichtung zur Erzeugung von digitalen Steuersignalen, die für eine pulsweitenmodulierte Ansteuerung, beispielsweise eines Hochfrequenzgenerators, geeignet ist. Unter dem Begriff Hochfrequenzgeneratoren werden insbesondere Halbbrückenwechselrichter, Vollbrückenwechselrichter und Push-Pull-Wechselrichter verstanden, die zum Beispiel in sogenannten Elektronischen Vorschaltgeräten zum Hochfrequenzbetrieb von Leuchtstofflampen oder von Hochdruckentladungslampen eingesetzt werden. Die Frequenz der von solchen Wechselrichtern generierten hochfrequenten Wechselspannung wird beispielsweise mittels eines Mikroprozessors und Integrierter Schaltkreise durch Erzeugung pulsweitenmodulierter Ansteuerungssignale für die Schalttransistoren des Wechselrichters auf die unterschiedlichen Betriebszustände der Leuchtstofflampen abgestimmt oder gemäß der Offenlegungsschrift EP 0 708 579 A1 zum Betrieb einer Hochdruckentladungslampe mit frequenzmoduliertem Wechselstrom verwendet. Mit Hilfe eines Mikroprozessors können allerdings nur digitale Steuersignale erzeugt werden. Dementsprechend kann die Frequenz des Hochfrequenzgenerators nur in diskreten Schritten verändert werden. Die kleinstmögliche, einstellbare Frequenzänderung ist bei den herkömmlichen Ansteuerungsvorrichtungen durch die Betriebsfrequenz des Hochfrequenzgenerators begrenzt. Das nachfolgende Beispiel soll diesen Sachverhalt näher erläutern.

Es ist bekannt, die Ansteuerung des Hochfrequenzgenerators mit Hilfe eines im Mikroprozessor implementierten Auto-Reload-Timers durchzuführen. Bei dem Auto-Reload-Timer handelt es sich im wesentlichen um ein programmierbares Zählwerk, das durch einen Oszillator mit einer vorgegebenen Frequenz betrieben wird und mit einem vorgebbaren Zahlenwert geladen wird. Wird der Auto-Reload-Timer mit dem Zahlenwert N geladen und bezeichnet man die Frequenz des den Zähltakt vorgebenden Oszillators mit F, so kann mit dem Auto-Reload-Timer eine Betriebsfrequenz f erzeugt werden, die durch Formel $f = F/2N$ gegeben ist. Die nächsthöhere Betriebsfrequenz läßt sich mit dem Zahlenwert N-1 erreichen. Der kleinstmögliche Frequenzschritt $\Delta f$ beträgt daher $\Delta f = f/(N-1)$. Für N=100 und F=10 MHz ergibt sich eine erzielbare Betriebsfrequenz von 50 kHz und ein kleinstmöglicher Frequenzschritt von 505 Hz. Das ist für manche Anwendungen, insbesondere für die Ansteuerung von Hochfrequenzgeneratoren, die einen Hochfrequenzbetrieb von Leuchtstofflampen und ein fein abgestuftes Dimmen der Leuchtstofflampen ermöglichen sollen, nicht ausreichend.

## II. Darstellung der Erfindung

Es ist die Aufgabe der Erfindung, eine verbesserte Vorrichtung zur Erzeugung digitaler Steuersignale bereitzustellen. Insbesondere soll die erfindungsgemäße Vorrichtung für eine fein abgestufte pulsweitenmodulierte Ansteuerung geeignet sein. Außerdem ist es die Aufgabe der Erfindung, ein verbessertes Verfahren zur Erzeugung digitaler Steuersignale anzugeben. Diese Aufgaben werden erfindungsgemäß durch die Merkmale des Patentanspruchs 1 bzw. 7 gelöst. Besonders vorteilhafte Ausführungen der Erfindung sind in den Unteransprüchen beschrieben.

Die erfindungsgemäße Vorrichtung zur Erzeugung digitaler Steuersignale weist folgende Merkmale auf:

- einen Oszillator, der einen digitalen Ausgang besitzt,
- ein erstes Speichermittel zur Speicherung des Wertes einer digital codierten Variablen, das einen mit dem digitalen Ausgang des Oszillators verbundenen Takteingang, einen Dateneingang und einen Datenausgang aufweist,
- ein zweites Speichermittel zur Speicherung des Wertes einer digital codierten Variablen, das einen mit dem digitalen Ausgang des Oszillators verbundenen Takteingang, einen Signaleingang und einen Signalausgang aufweist,
- einen Addierer, der zwei Dateneingänge, einen Datenausgang und einen Carry-Ausgang aufweist, wobei
- der erste Dateneingang des Addierers mit dem Datenausgang des ersten Speichermittels verbunden ist,
- der zweite Dateneingang des Addierers mit dem Datenausgang des zweiten Speichermittels verbunden ist,
- der Datenausgang des Addierers mit dem Dateneingang des zweiten Speichermittels verbunden ist, und
- der Carry-Ausgang des Addierers mit einem Impulsteiler verbunden ist.

Mit der erfindungsgemäßen Vorrichtung können erheblich feiner frequenzabgestufte digitale Steuersignale erzeugt werden, die eine entsprechend genauere pulsweitenmodulierte Ansteuerung, beispielsweise eines Hochfrequenzgenerators, ermöglichen. Die kleinstmögliche Frequenzdifferenz, die zwei mit der erfindungsgemäßen Vorrichtung erzeugte Steuersignale aufweisen können, ist bei vorgegebener Taktfrequenz des Oszillators nur durch die Speichergröße bzw. Wortbreite des Addierers sowie der beiden Speichermittel begrenzt. Jedes zusätzliche Bit im Register des Addierers halbiert die kleinstmögliche Frequenzdifferenz bzw. den Abstand zweier benachbarter Frequenzen.

Vorteilhafterweise ist die erfindungsgemäße Vorrichtung mit einem 16 Bit Addierer und zwei 16 Bit Latches ausgestattet. Die Verwendung von 16 Bit Komponenten erlaubt die Erzeugung von digitalen Steuersignalen, deren Frequenz bereits sehr fein abstufbar ist. Beträgt beispielsweise die Taktfrequenzs des Oszillators 10 MHz, so lassen sich mit den vorgenannten 16 Bit Komponenten Steuersignale im Frequenzbereich von ungefähr 76,3 Hz bis 4,99 MHz erzeugen. Der kleinstmögliche Frequenzschritt beträgt im gesamten Frequenzbereich ungefähr 76,3 Hz. Als Impulsteiler wird in der erfindungsgemäßen Vorrichtung vorteilhafterweise ein T-Flip-Flop verwendet. Er eignet sich besonders gut zur Umwandlung des Carry-Signals in ein pulsweitenmoduliertes Steuersignal, da der Ausgangszustand des T-Flip-Flops sich bei genau einer Flanke - im vorliegenden Ausführungsbeispiel beim Auftreten der steigenden Flanke - des Carry-Signals ändert. Die erfindungsgemäße Vorrichtung kann vorteilhafterweise als Bestandteil eines Mikroprozessors ausgebildet sein. Es ist auch möglich, mehrere der erfindungsgemäßen Vorrichtungen in einem Mikroprozessor zu implementieren, um beispielsweise mehrere separate Steuersignale zu erzeugen. Ein derartiger Mikroprozessor kann vorteilhafterweise in eine Ansteuerungsvorrichtung für einen Hochfrequenzgenerator eingesetzt werden. Die erfindungsgemäße Vorrichtung läßt sich vorteilhafterweise zur Frequenzsteuerung oder Pulsweitenmodulation eines Hochfrequenzgenerators, insbesondere eines Hochfrequenzgenerators aus der Gruppe Halbbrückenwechselrichter, Vollbrückenwechselrichter und Push-Pull-Wechselrichter, verwenden.

Das erfindungsgemäße Verfahren zur Erzeugung digitaler Steuersignale weist folgende Verfahrensschritte auf:

A) Speichern eines vorgebbaren Wertes einer ersten Variablen in dem ersten Speichermittel,
B) Einspeisen des im ersten Speichermittel gespeicherten Wertes der ersten Variablen als ersten Summanden in den Addierer,
C) Einspeisen eines im zweiten Speichermittel gespeicherten Momentanwertes einer zweiten Variablen als zweiten Summanden in den Addierer,
D) Ermitteln der Summe aus dem ersten und zweiten Summanden im Addierer und Übertragen eines Carry-Signals an den Impulsteiler,
E) Speichern des vom Addierer ermittelten Resultats der Addition in dem zweiten Speichermittel als neuer Momentanwert der zweiten Variablen,
F) Wiederholen der vorgenannten Verfahrensschritte B) bis F) im vom Oszillator vorgegebenen Takt.

Mit Hilfe des oben beschriebenen Arbeitsverfahrens werden zur pulsweitenmodulierten Ansteuerung verwendbare digitale Steuersignale generiert, deren Frequenz in vergleichsweise kleinen Schritten abstufbar ist. Die Frequenz der nach dem erfindungsgemäßen Verfahren erzeugten digitalen Steuersignale wird, bei vorgegebener Oszillatorfrequenz und vorgegebenen Hardware-Eigenschaften, durch die Vorgabe eines Zahlenwertes für die erste Variable bestimmt. Eine Frequenzänderung der nach dem erfindungsgemäßen Verfahren erzeugten digitalen Steuersignale wird vorteilhafterweise durch Ändern des Wertes der im ersten Speichermittel gespeicherten ersten Variable und Ausführen der Verfahrensschritte A) bis F) herbeigeführt.

III. Beschreibung des bevorzugten Ausführungsbeispiels

Nachstehend wird die Erfindung anhand eines bevorzugten Ausführungsbeispiels näher erläutert. Es zeigen:

Figur 1      ein Blockschaltbild der erfindungsgemäßen Vorrichtung in schematischer Darstellung

Figur 2      eine schematische Darstellung der am Carry-Ausgang des Addierers und am Ausgang des Impulsteilers generierten digitalen Signale

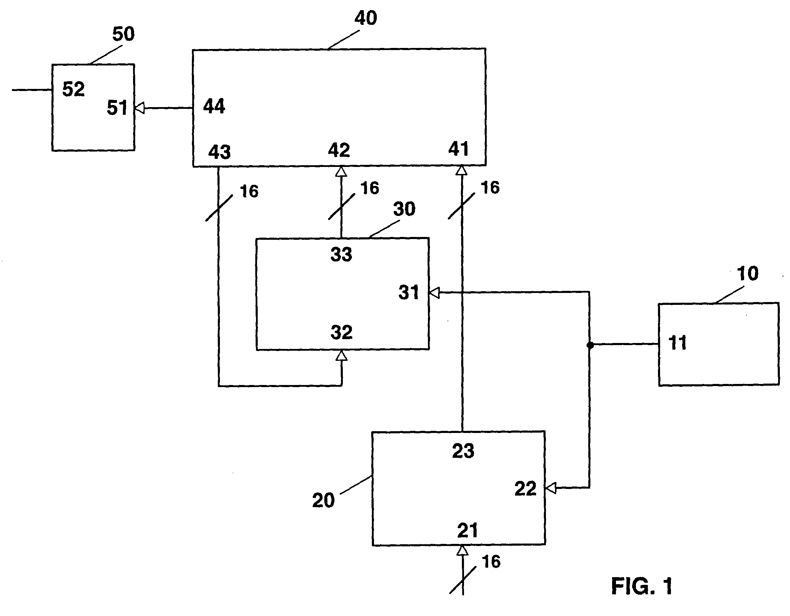

Die Figur 1 zeigt eine schematische Darstellung des bevorzugten Ausführungsbeispiels der erfindungsgemäßen Vorrichtung. Die erfindungsgemäße Vorrichtung weist einen Oszillator 10, einen ersten 16 Bit Data Latch 20, einen zweiten 16 Bit Data Latch 30, einen 16 Bit Addierer 40 und ein T-Flip-Flop 50 auf. Der digitale Ausgang 11 des Oszillators 10 ist mit dem Takteingang 22 des ersten 16 Bit Data Latches 20 und mit dem Takteingang 31 des zweiten 16 Bit Data Latches verbunden. Der erste 16 Bit Data Latch 20 ist über eine 16 Bit Datenleitung mit dem ersten Dateneingang 41 des 16 Bit Addierers 40 verbunden. Der zweite 16 Bit Data Latch 30 ist über eine 16 Bit Datenleitung mit dem zweiten Dateneingang 42 des Addierers 40 verbunden. Der Datenausgang 43 des 16 Bit Addierers 40 ist mit dem Dateneingang 32 des zweiten 16 Bit Data Latches 30 verbunden. Der Carry-Ausgang 44 des 16 Bit Addierers 40 ist sowohl mit dem Eingang 51 des T-Flip-Flops 50 verbunden. Der Ausgang 52 des T-Flip-Flops 50 bildet den Signalausgang 52 der erfindungsgemäßen Vorrichtung. Der Dateneingang 21 des ersten 16 Bit Data Latches bildet den Signaleingang 21 der erfindungsgemäßen Vorrichtung. Der Dateneingang 21 kann über eine 16 Bit Datenleitung mit dem Datenausgang eines Mikroprozessors verbunden sein.

Es ist aber auch möglich, die oben beschriebene Vorrichtung als Bestandteil eines Mikroprozessors auszuführen. Der Signalausgang 52 kann direkt oder über eine Verstärkeranordnung mit einem Hochfrequenzgenerator, beispielsweise mit einem Wechselrichter verbunden sein.

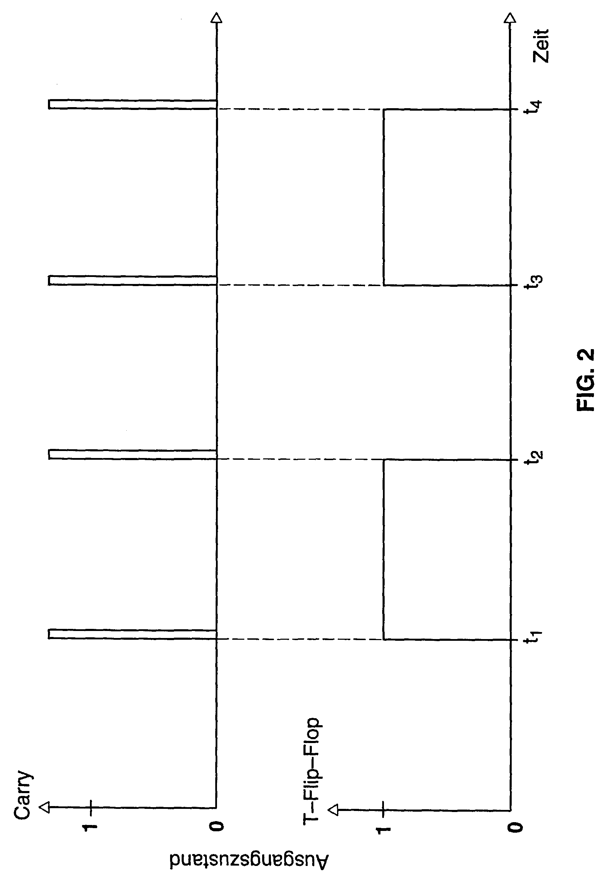

Nachstehend wird die Arbeitsweise der in Figur 1 abgebildeten Vorrichtung näher erläutert. Über den Dateneingang 21 wird der erste 16 Bit Data Latch 20 auf einen vorgebbaren Wert N geladen. Der im ersten 16 Bit Data Latch gespeicherte Wert N wird dem ersten Dateneingang 41 des 16 Bit Addierers 40 zugeführt und als erster Summand für eine erste Addition im Addierer 40 gespeichert. Der momentane Wert des Speicherinhalts des zweiten 16 Bit Data Latches ist gleich Null. Er wird dem zweiten Dateneingang 42 des 16 Bit Addierers 40 als zweiter Summand für die erste Addition zugeführt. Das Ergebnis der im Addierer 40 durchgeführten Addition wird dem zweiten 16 Bit Data Latch 30 zugeführt und dort als neuer Momentanwert für die nächste durchzuführende Addition gespeichert. Zur Durchführung der zweiten und jeder weiteren Addition wird dem Addierer 40 der im ersten 16 Bit Data Latch 20 gespeicherte Wert N als erster Summand und der Momentanwert des Speicherinhalts des zweiten 16 Bit Data Latches 30, der gleich dem Ergbnis der unmittelbar zuvor durchgeführten Addition ist, als zweiter Summand zugeführt. Alle Additionen werden im Binärcode durchgeführt. Das Übertragen der Speicherinhalte der beiden Data Latches 20, 30 an den Addierer 40 erfolgt in dem vom Oszillator 10 vorgegebenen Schalttakt. Der Oszillator 10 schwingt bei dem bevorzugten Ausführungsbeispiel mit einer Frequenz von 10 MHz. Das bedeutet, daß der Addierer 40 in einem zeitlichen Abstand von 0,1 µs mit neuen ersten und zweiten Summanden für die jeweils nächste Addition gespeist wird. Der erste Summand behält bei allen Additionen seinen Wert N bei. Der Wert W des zweiten Summanden ändert sich hingegen ständig. Er beträgt für die k-te Addition $W = (k-1)N$ modulo $2^{16}$. Nach einer bestimmten Anzahl von Additionen, das heißt, wenn das Ergebnis der zuvor durchgeführten Additionen den Wert $2^{16} = 65536$ erreicht oder überschreitet, tritt im Addierer 40 ein Zählerüberlauf auf. Bei jedem Zählerüberlauf des Addierers 40 wird sein Carry-Ausgang 44 in den logischen Zustand "1" versetzt. Findet kein Zählerüberlauf statt, so behält der Carry-Ausgang 44 den logischen Zustand "0" bei bzw. wird in diesen Zustand zurückgesetzt. Der Zustand des Carry-Ausgangs 44 wird von dem Eingang 51 des T-Flip-Flops 50 detektiert. Findet kein Zählerüberlauf statt, so detektiert der Eingang 51 des T-Flip-Flops 50 eine logische "0". Der Ausgang 52 des JK-Flip-Flops 50 wird daher seinen momentanen Ausgangszustand beibehalten. Tritt hingegen ein Zählerüberlauf auf, so detektiert der Engang 51 des T-Flip-Flops 50 eine logische "1". Der Ausgang 52 des T-Flip-Flops 50 wird daher in den anderen logischen Ausgangszustand umgeschaltet. Das T-Flip-Flop 50 reagiert auf die steigende Flanke des Carry-Signals. Der Verlauf des Carry-Signals am Carry-Ausgang 44 und des Ausgangssignals am Ausgang 52 des T-Flip-Flops 50 sind in der Figur 2 schematisch dargestellt. Auf diese Weise wird das Carry-Signal vom T-Flip-Flop 50 in ein zur Pulsweitenmodulation, beispielsweise eines Wechselrichters, verwendbares digitales Signal umgewandelt. Der zeitliche Abstand der Carry-Impulse hängt von der Anzahl der Additionen ab, die erforderlich ist, um einen Zählerüberlauf hervorzurufen, und läßt sich daher durch Vorgabe des Wertes N gezielt beeinflussen. Durch die zeitliche Abfolge der Carry-Impulse wird die Frequenz des Ausgangssignals am Ausgang 52 des T-Flip-Flops 50 bestimmt. Die mittlere Frequenz F des Ausgangssignals am Ausgang 52 der Vorrichtung kann gemäß der Formel

$$F = 0,5 \, C \, N/2^{16}, \text{ wobei C die Taktfrequenz des Oszillators 10 ist,}$$

berechnet werden. Die tiefste Frequenz, die mit der Vorrichtung generiert werden kann, ergibt sich für N=1 und C=10 MHz zu F=76,3 Hz und als höchste Frequenz erhält man mit N=65535 für F=4,99 MHz. Entsprechend der obengenannten Formel kann die mittlere Frequenz F des Ausgangssignals am Ausgang 52 der Vorrichtung durch geeignete Wahl des Wertes N, der in den ersten 16 Bit Data Latch geladen wird, gezielt eingestellt werden. Die mittlere Frequenz F des Ausgangssignals am Ausgang 52 wird durch entsprechende Vorgabe des Wertes N in diskreten Schritten verändert. Die Vorgabe des Wertes N erfolgt programmgesteuert, beispielsweise mittels eines Mikroprozessors. Der kleinstmögliche, einstellbare Frequenzschritt $\Delta f$ beträgt $\Delta f = 0,5 \, C/2^{16}$ und beim vorliegenden Ausführungsbeispiel daher ca. 76,3 Hz. Aus den obigen Formeln kann man entnehmen, daß sich mit jedem zusätzlichen Bit im Addierer 40 und den Speichermitteln 20, 30 eine weitere Halbierung des kleinstmöglichen Frequenzschrittes $\Delta f$ erzielen läßt.

Ein wichtiger Aspekt der Erfindung soll an dieser Stelle näher erläutert werden. Wie bereits oben erwähnt wurde, berechnet sich der Wert W des im zweiten 16 Bit Data Latch 30 gespeicherten zweiten Summanden, der zur Durchführung der k-ten Addition verwendet wird, nach der Formel:

$$W = (k-1)N \text{ modulo } 2^{16}$$

Aus dieser vorstehenden Formel ist ersichtlich, daß der Wert W des zweiten Summanden nach einem Zählerüberlauf im Regelfall nicht auf Null zurückgesetzt wird. Die unmittelbar auf einen Zählerüberlauf folgende Addition wird daher in der Regel - der Ausnahmefall tritt nur ein, wenn der Wert N eine Zweierpotenz ist - mit einem zweiten Summanden durchgeführt, der einen, nach jedem Zählerüberlauf wechselnden, von Null verschiedenen Wert W besitzt. Folglich kann zur Auslösung des nächsten Zählerüberlaufs bereits eine Addition weniger erforderlich sein. Dementsprechend folgen die in Figur 2 schematisch dargestellten Carry-Impulse in der Regel nicht in konstanten Zeiträumen. Der zeitliche Abstand zweier aufeinanderfolgender Carry-Impulse kann daher um die für eine Addition benötigte Zeitdauer, im vorliegenden Ausführungsbeispiel beträgt diese 0,1 μs, variieren. Die digitalen Ausgangssignale am Ausgang 52 sind aus diesem Grund in der Regel geringfügig pulsweitenmoduliert. Insofern wird mit der oben angegebenen Formel für die Frequenz F der am Ausgang 52 generierten Ausgangssignale nur ein Mittelwert angegeben.

Die oben beschriebene Vorrichtung kann beispielsweise zur Erzeugung von Ansteuerungssignalen für die Schalttransistoren eines Halbbrückenwechselrichters verwendet werden. Dem Halbbrückenwechselrichter ist beispielsweise ein Serienresonanzkreis nachgeschaltet, der im wesentlichen aus einem Resonanzkondensator und einer Resonanzinduktivität besteht. Parallel zum Resonanzkondensator ist eine Entladungslampe, beispielsweise eine Leuchtstofflampe oder eine Hochdruckentladungslampe, angeordnet. Die Entladungslampe wird vom Halbbrückenwechselrichter mit einer hochfrequenten Wechselspannung mit einer Frequenz oberhalb von 20 kHz beaufschlagt. Die Frequenz des Lampenstroms bzw. der Lampenspannung ist durch die Schaltfrequenz der alternierend schaltenden Transistoren des Halbbrückenwechselrichters bestimmt und läßt sich daher durch die oben beschriebene, erfindungsgemäße Vorrichtung direkt steuern. Es ist dabei möglich, die Ansteuerungssignale für die beiden Schalttransistoren des Halbbrückenwechselrichters durch eine einzige oder auch durch zwei separate Vorrichtungen gemäß des oben beschriebenen Ausführungsbeispiels zu erzeugen. Handelt es sich bei der zu betreibenden Entladungslampe um eine Leuchtstofflampe, so wird durch eine geeignete Vorgabe des Wertes N und Ausführen der obengenannten Arbeitsschritte A) bis F) die Schaltfrequenz der Halbbrückenwechselrichtertransistoren in die Nahe der Resoanzfrequenz des Serienresonanzkreises gelegt, um die Zündung einer Gasentladung in der Leuchtstofflampe mittels der Methode der Resonanzüberhöhung zu initiieren. Nach erfolgter Zündung der Gasentladung wird die Schaltfrequenz des Halbbrückenwechselrichters durch Ändern des Wertes N und Ausführen der obengenannten Arbeitsschritte A) bis F) mit dem neuen Wert N der im ersten 16 Bit Data Latch gespeicherten ersten Variablen erhöht. Zum Dimmen der Leuchtstofflampe kann die Frequenz des Lampenstroms durch Variation des Wertes N geändert werden.

Handelt es sich bei der Entladungslampe um eine Hochdruckentladungslampe, so wird mit Hilfe des Halbbrückenwechselrichters und der erfindungsgemäßen Ansteuerungsvorrichtung für den Halbbrückenwechselrichter eine Frequenzmodulation des Lampenwechselstroms durchgeführt, wie das beispielsweise in der Offenlegungsschrift EP 0 708 579 A1 offenbart ist. Die Schaltfrequenz der Halbbrückenwechselrichtertransistoren und damit auch die Lampenstromfrequenz wird durch eine programmgesteuerte Variation des Wertes N und Ausführen der obengenannten Arbeitsschritte A) bis F) für jeden neuen Wert N moduliert, um das Auftreten von akustischen Resonanzen im Entladungsmedium der Hochdruckentladungslampe zu vermeiden.

Die Erfindung beschränkt sich nicht auf das oben naher erläuterte Ausführungsbeispiel. Beispielsweise liegt es im Ermessen des Fachmanns, statt der im Ausführungsbeispiel angegeben 16 Bit Data Latches und des 16 Bit Addierers andere geeignete Speichermittel oder einen anderen Addierer zu verwenden. Ferner können eine oder mehrere der erfindungsgemäßen Vorrichtungen auch als Bestandteil eines Mikroprozessors ausgeführt werden.

**Patentansprüche**

1. Vorrichtung zur Erzeugung von digitalen Steuersignalen mit folgenden Merkmalen:

   - einem Oszillator (10), der einen digitalen Ausgang (11) besitzt,
   - einem ersten Speichermittel (20) zur Speicherung des Wertes einer digital codierten Variablen, das einen mit dem digitalen Ausgang (11) des Oszillators (10) verbundenen Takteingang (22), einen Dateneingang (21) und einen Datenausgang (23) aufweist,
   - einem zweiten Speichermittel (30) zur Speicherung des Wertes einer digital codierten Variablen, das einen mit dem digitalen Ausgang (11) des Oszillators (10) verbundenen Takteingang (31), einen Dateneingang (32) und einen Datenausgang (33) aufweist,
   - einem Addierer (40), der zwei Dateneingänge (41, 42), einen Datenausgang (43) und einen Carry-Ausgang (44) aufweist, wobei
   - der erste Dateneingang (41) des Addierers (40) mit dem Datenausgang (23) des ersten Speichermittels (20) verbunden ist,
   - der zweite Dateneingang (42) des Addierers (40) mit dem Datenausgang (33) des zweiten Speichermittels (30) verbunden ist,
   - der Datenausgang (43) des Addierers (40) mit dem Dateneingang (32) des zweiten Speichermittels (30) verbunden ist, und
   - der Carry-Ausgang (44) des Addierers (40) mit einem Impulsteiler (50) verbunden ist.

2. Vorrichtung nach Anspruch 1, dadurch gekennzeichnet, daß das erste (20) und zweite Speichermittel (30) als 16 Bit Latch und der Addierer (40) als 16 Bit Addierer ausgebildet sind.

3. Vorrichtung nach Anspruch 1, dadurch gekennzeichnet, daß der Impulsteiler (50) ein T-Flip-Flop ist.

4. Mikroprozessor mit mindestens einer Vorrichtung gemäß Anspruch 1.

5. Ansteuerungsvorrichtung für einen Hochfrequenzgenerator mit einem Mikroprozessor gemäß Anspruch 4.

6. Verwendung einer Vorrichtung gemäß Anspruch 1 zur Frequenzsteuerung oder Pulsweitenmodulation eines Hochfrequenzgenerators, insbesondere eines Hochfrequenzgenerators aus der Gruppe Halbbrückenwechselrichter, Vollbrückenwechselrichter und Push-Pull-Wechselrichter.

7. Verfahren zur Erzeugung digitaler Steuersignale mittels einer Vorrichtung gemäß Anspruch 1, das folgende Verfahrensschritte aufweist:

   A) Speichern eines vorgebbaren Wertes einer ersten Variablen in dem ersten Speichermittel (20),
   B) Einspeisen des im ersten Speichermittel (20) gespeicherten Wertes der ersten Variablen als ersten Summanden in den Addierer (40),
   C) Einspeisen eines im zweiten Speichermittel (30) gespeicherten Momentanwertes einer zweiten Variablen als zweiten Summanden in den Addierer (40),
   D) Ermitteln der Summe aus dem ersten und zweiten Summenden im Addierer (40) und Übertragen eines Carry-Signals an den Impulsteiler (50),
   E) Speichern des vom Addierer (40) ermittelten Resultats der Addition in dem zweiten Speichermittel (30) als neuer Momentanwert der zweiten Variablen,
   F) Wiederholen der vorgenannten Verfahrensschritte B) bis F) im vom Oszillator (10) vorgegebenen Takt.

8. Verfahren nach Anspruch 7, dadurch gekennzeichnet, daß der Impulsteiler (50) das Carry-Signal in ein pulsweitenmoduliertes Ansteuerungssignal umwandelt.

9. Verfahren nach Anspruch 8, dadurch gekennzeichnet, daß zur Frequenzänderung des pulsweitenmodulierten Ansteuerungssignals der vorgebbare Wert der im ersten Speichermittel (20) gespeicherten ersten Variable geändert wird und die Verfahrensschritte A) bis F) mit dem geänderten Wert der ersten Variable durchgeführt werden.

FIG. 1

EP 1 087 285 A2

**FIG. 2**

EP 1 087 285 A2